# EUROPÄISCHE PATENTANMELDUNG

(11) **EP 0 770 867 A1**
(43) Veröffentlichungstag der Anmeldung: **02.05.1997**
(21) Anmeldenummer: 95116639.6
(22) Anmeldetag: 23.10.1995
(51) Int. Cl.: G01N 21/00, G01N 29/04

(54) **Verfahren zur Qualitätsprüfung von Halbzeugen, Baugruppen und Bauteilen mit Ultraschall**

(71) Anmelder: INPRO Innovationsgesellschaft für fortgeschrittene Produktionssysteme in der Fahrzeugindustrie mbH, 10587 Berlin (DE); Reichau, Ralf, Dipl.-Ing., 13507 Berlin (DE)
(72) Erfinder: Reichau, Ralf, D-13507 Berlin (DE); Ullmann, Falk, Dr., c/o Inpro.., D-10587 Berlin (DE); Jansen, Martin, c/o Inpro.., D-10587 Berlin (DE)
(74) Vertreter: Hoffmann, Klaus-Dieter, Dipl.-Ing.

(57) **Zusammenfassung**

Die Erfindung betrifft ein Verfahren zur Qualitätsprüfung von Halbzeugen, Baugruppen und Bauteilen, insbesondere von faserverstärkten Kunststoff-Formteilen und Blechbauteilen, bei dem zum Erkennen von Materialfehlern und/oder -eigenschaften das Frequenzspektrum von Anregungsschwingungen eines zu prüfenden Bauteils mit dem Frequenzspektrum eines gleichartigen Gut-Bauteils mit bekannten Eigenschaften als Bezugsspektrum verglichen wird. Um zerstörungsfrei, rationell und mit hoher Zuverlässigkeit insbesondere bei vollautomatisierten Verfahrensabläufen eine solche Qualitätsprüfung zu gewährleisten, wird in das zu prüfende Bauteil ein nach Form und Amplitude überwachtes Anregungssignal eingekoppelt, das eingekoppelte Anregungssignal und/oder ein Antwortsignal detektiert, das Anregungssignal und/oder das Übertragungsverhalten des zu prüfenden Bauteils ermittelt, analysiert und dann eine Entscheidungsfindung nach iO und niO Qualität vollzogen.

## Beschreibung

Die Erfindung betrifft ein Verfahren zur Qualitätsprüfung von Halbzeugen, Baugruppen und Bauteilen, insbesondere von faserverstärkten Kunststoff-Formteilen und Blechbauteilen, bei dem zum Erkennen von Materialfehlern und/oder -eigenschaften das Frequenzspektrum von Anregungsschwingungen eines zu prüfenden Bauteils mit dem Frequenzspektrum eines gleichartigen Gut-Bauteils mit bekannten Eigenschaften als Bezugsspektrum verglichen wird.

Die Erfindung betrifft ferner eine Prüfanordnung zur Durchführung des Verfahrens, mit einer Aktuator-Sensoreinheit, die ein Koppelelement aufweist.

In der Produktion industrieller Massengüter sind effektive, zerstörungsfreie Prüfverfahren zur Kontrolle des Produktionsprozesses sowie in der Wareneingangskontrolle zur Aufrechterhaltung der Produktqualität erforderlich. Der zunehmende Trend, Zulieferer mit der Produktion von Bauteilen und Baugruppen zu beauftragen, erfordert eine Qualitätskontrolle beim Zulieferer sowie eine zerstörungsfreie Wareneingangskontrolle beim Kunden. Die Prüfung der Bauteilqualität darf die Produktion nicht beeinflussen, bei hohen Stückzahlen von 10 - 15 Teilen/Minute wie sie z. B. im Preßwerken gefahren werden, sind herkömmliche zerstörungsfreie Prüfverfahren für diese Aufgabe nicht geeignet. Neben der Prüfung insbesondere sicherheitsrelevanter Bauteile, kann eine in den Produktionsprozeß integrierte Bauteilvollprüfung im Rahmen der DIN-ISO 9000 zur Dokumentation der Produktqualität herangezogen werden.

Der Einsatzbereich thermoplastischer Kunststoffe wird durch Einbringen von Langfasern erheblich erweitert. Hohe mechanische Festigkeit und Elastizität sowie geringe Dichte und Wärmedehnung erlauben im Kraftfahrzeug sowohl die Substitution metallischer Bauteile als auch technischer Thermoplaste durch langfaserverstärkte Thermoplaste. Insbesondere die mechanischen Eigenschaften bei erhöhten Temperaturen sind im Vergleich zu Kurzfasermaterialien bei gleichem Fasergehalt deutlich verbessert. Großserientaugliche Fertigungsverfahren sind Spritzgießen, Blasformen, Profilextrudieren und Fressen. Die mechanischen und thermischen Eigenschaften sind neben dem Fasergehalt überwiegend von der Faserlänge bzw. der Faserlängenhäufigkeitsverteilung im Bauteil abhängig. Diese Parameter sind jedoch in hohem Maße von einer optimalen Verarbeitung des Werkstoffes abhängig. Für die Einführung von langfaserverstärktem Polypropylen in die Produktion ist es von entscheidender Bedeutung, ein Prüfinstrument zur Sicherstellung der Bauteilqualität nutzen zu können. Zusätzlich erfordern auch das Spritzgießen und Fressen hinreichend präzise Aussagen über das temperaturabhängige Leistungsniveau von Fertigteilen.

Im Einsatzbereich thermoplastischer Kunststoffe sind derzeit nur aufwendige Prüfverfahren wie z. B. Faserlängenanalyse, Zugversuch, Biegeversuch, Schlagbiegeversuch und Torsionsschwingversuch zur Ermittlung des temperaturabhängigen Eigenschaftsniveaus verfügbar.

Im Rahmen von Wareneingangsprüfungen ist dieser Aufwand jedoch zu hoch. Ein kostengünstiges zerstörungsfreies Verfahren zur Überprüfung von langfaserverstärkten Bauteilen zur Sicherstellung einer hohen mittleren Faserlänge und der damit verbundenen mechanischen Eigenschaften ist bis jetzt noch nicht entwickelt. Aber auch der zunehmende Kostendruck bei der Entwicklung von faserverstärkten Kunststoffbauteilen fordert ein einfaches kostengünstiges und möglichst zerstörungsfreies Prüfverfahren als Entwicklungswerkzeug sowie zur Sicherstellung der Bauteilqualität über den gesamten Lebenszyklus.

Im Bereich der Automobilindustrie reicht die Produktpalette von einfachen Blechlaschen über sichtbare Außenhautblechteile bis hin zu sicherheitsrelevanten Blechträgern des Fahrwerks und der Karosserie. Die Qualität der Karosseriebauteile wird durch Einschnürungen und Risse sowie durch Falten im Blechteil bestimmt. Einschnürungen und Risse entstehen während der Blechumformung in der ersten Prozeßstufe im Preßwerk. Eine Kontrolle der Bauteilqualität erfolgt in der Regel durch Mitarbeiter am Ende der aus bis zu 10 Pressen bestehenden Pressenstraße. Fehlerhaft gezogene Blechteile werden erst nach dem Durchlaufen aller Pressen erkannt, im ungünstigsten Fall werden erst 10 fehlerhafte Blechteile hergestellt, bevor ein gestörter Prozeß bemerkt wird. Insbesondere Einschnürungen sind nur durch erfahrene Kontrolleure zu erkennen. Nicht erkannte Einschnürungen können während der dem Preßwerk folgenden Bearbeitungs- und Montageschritte, oder beim Kunden aufreißen. Die Folgekosten für Nachbesserungen oder geltend gemachte Garantieansprüche bis hin zu gerichtlichen Prozessen sind beträchtlich.

In der zunehmend automatisierten Montage der Blechteile zu Baugruppen (Türen, Hauben, Karossen) können Bestückungsfehler oder Fügefehler, wie fehlende Schweißpunkte, unzureichende Klebeverbindungen, Stanzverbindungen sowie deren Kombination auftreten. Fehlende Verstärkungsbleche oder mangelhafte Fügestellen werden in der Regel erst durch einen vorzeitigen Ausfall der Baugruppe erkannt.

Die am Beispiel der Herstellung von Karosserieblechteilen aufgeführte Problematik gilt für alle Produkte aus Blechbauteilen. Hier sind unter anderem Einsatzgebiete wie Flugzeugbau, Gehäuse von Haushaltsgeräten und Schaltschränke zu nennen.

An sich bekannte Prüfverfahren sind
Ultraschallverfahren,
die aktive und passive Schallemissionsanalyse,
Wärmeflußverfahren und Wärmewellenanalyse,
die Röntgenprüfung,
die Schwingungsanalyse und
die Mikrowellenanalyse

Mit Ausnahme der Schwingungsanalyse ist für die genannten Verfahren ein hoher meßtechnischer Aufwand erforderlich, der in einer Massenproduktion nicht vertretbar ist. Der Einsatz der Schwingungsanalyse ist in Verbindung mit der Beurteilung innerer Fehler wie Risse, Delamination, Porositäten oder Aushärtefehler sowie zur Detektierung von losen Befestigungselementen oder irreversiblen Schädigungen bekannt (vgl. Schmiedel, H.: "Handbuch der Kunststoffprüfung", München, Wien, Hanser, 1992, Seiten 440, 441). Die Möglichkeit, die Schwingungsanalyse zur Bauteilprüfung zu nutzen, hat bislang jedoch praktisch keine Beachtung gefunden.

Die Prüfung von Blechbauteilen erfolgt bei Massenprodukten in der Regel durch den Menschen. Hier sind je nach Bauteilgröße ein bis vier Mitarbeiter erforderlich, die die Blechteile abstapeln und prüfen. Bei einer Stückzahl von 10 Teilen/Minute sind während einer Schicht ca. 4500 Bauteile zu prüfen.

Bekannte Prüfverfahren sind in diesem Bereich Ultraschallverfahren, die aktive und passive Schallemissionsanalyse, Wirbelstromverfahren, Magnetpulververfahren, magnetoelastische Verfahren und die Farbeindringprüfung.

Gedanklich geht die Erfindung davon aus, daß die Qualität eines Bauteils durch die Werkstoffeigenschaften und die Bauteilgeometrie bestimmt wird. Veränderungen des Werkstoffes wie Veränderungen des Fasergehaltes oder der Faserlänge sowie Fehler in der Bauteilgeometrie wie Formfehler, Einschnürungen oder Risse bewirken eine Veränderung der Bauteilsteifigkeit und somit des dynamischen Verhaltens des Bauteils. Das dynamische Bauteilverhalten wird durch die Eigenfrequenzen, Eigenschwingungsformen und Bauteildämpfung charakterisiert.

Der Erfindung liegt die Aufgabe zugrunde, ein Verfahren der eingangs erwähnten Art zur Verfügung zu stellen, mit dem unter Ausnutzung des unterschiedlichen dynamischen Verhaltens von "guten" und fehlerhaften Bauteilen, insbesondere von faserverstärkten Kunststoff-Formteilen gegenüber akustischen Schwingungen, beispielsweise der unterschiedlichen Bauteilsteifigkeit und des unterschiedlichen Dämpfungsverhaltens, eine effektive, zerstörungsfreie Qualitätsprüfung von Bauteilen insbesondere ohne Unterbrechung des Produktionsprozesses möglich ist. Weiterhin soll eine geeignete Prüfanordnung zur Durchführung eines derartigen Verfahrens geschaffen werden, wobei für eine eindeutige Aussage der gemessenen und aufgezeichneten Spektren über die Qualität der zu prüfenden Bauteile insbesondere Konstanz und Gleichheit der Anregung des Schwingungserzeugers in Form und Bezugsbauteil und das zu prüfende Bauteil gewährleistet sein sollen.

Erfindungsgemäß wird diese Aufgabe dadurch gelöst, daß in das zu prüfende Bauteil ein nach Form und Amplitude überwachtes Anregungssignal eingekoppelt wird,
das eingekoppelte Anregungssignal und/oder ein Antwortsignal detektiert wird,
das Anregungssignal und/oder das Übertragungsverhalten des zu prüfenden Bauteils ermittelt, analysiert und die gewonnenen Daten mit denen des Gut-Bauteils verglichen werden sowie über iO (in Ordnung) oder niO (nicht in Ordnung) entschieden wird.

Vorzugsweise wird das Anregungssignal in das Frequenzspektrum transformiert und das Frequenzspektrum dann elektronisch analysiert. Es können auch die Zeitkomponenten des ermittelten Anregungssignals ausgewertet werden. Ferner wird vorzugsweise das Anregungssignal und/oder das Antwortsignal in Abhängigkeit von der Temperaturveränderung des Bauteils ermittelt.

Vorzugsweise werden Einzelimpulse als Anregungssignal gewählt, um das Bauteil zu freien Schwingungen anzuregen, oder das Bauteil wird durch Schwingungen, die über einen gewissen Bereich frequenzvariabel sind und beliebige Form und Amplitude aufweisen, zu erzwungenen Schwingungen angeregt. Zum Schwingungsanregen können Signalformen wie Rechteck-Impuls, Dreieck-Impuls, Sinusimpuls, Gauß freimodulierte Signalformen oder Rauschen gewählt werden. Die Anregung des Bauteils kann mittels piezoelektrischer, elektrodynamischer, elektrostatischer, magnetostriktiver, pneumatischer und/oder hydrodynamischer Wandler-Prinzipien sowie Hammerimpuls erfolgen. Entsprechend kann die Erfassung des Anregungssignals und/oder des Antwortsignals auf der Basis piezoelektrischer, elektrodynamischer, elektrostatischer, magnetostriktiver und/oder resistiver Wandler Prinzipien und/oder mittels Dehnungsmeßstreifen erfolgen.

Bevorzugt wird die Analyse des Anregungssignals und/oder des Antwortsignals mittels Fouriertransformation durchgeführt. Ferner können das Anregen, Detektieren und Auswerten im Fertigungsprozeß online erfolgen, wobei das Anregungssignal über einen Funktionsgenerator mit nachgeschaltetem Leistungsverstärker mit Hilfe eines Aktuators in das Bauteil eingekoppelt und nach dem Detektieren über den Kraftsensor oder Wegsensor und einen Tiefpaßfilter einem A/D-Umsetzer zugeführt, von diesem digitalisiert und auf den Impuls getriggert wird, anschließend im Zeitbereich (Impulsdauer) oder mittels einer hard- oder softwaremäßigen Transformation in den Frequenzbereich überführt und dann mit Hilfe lernfähiger Methoden, neuronaler Netze oder Fuzzy-Logik ausgewertet wird, worauf das Ergebnis der Entscheidungsfindung iO (in Ordnung) oder niO (nicht in Ordnung) ausgegeben und bei Bedarf zur Prozeßregelung und/oder zur weiteren Auswertung verwendet wird.

Zur Qualitätsprüfung eines faserverstärkten Kunststoff-Formteils ist es möglich, den Fasergehalt und die mittlere Faserlänge im Kunststoff-Formteil bzw. eine Abweichung von dem Soll-Fasergehalt und der Soll-Faserlänge des Gut-Kunststoff-Formteils durch einfache Berechnung des Korrelationskoeffizienten zwischen Soll- und Istspektrum zu bestimmen und gleichzeitig eine Abweichung der Material- oder Formteileigenschaften anhand der Verschiebung der Maxima bzw. Minima festzustellen. Zur genauen Ermittlung des tatsächlichen Fasergehaltes und der Faserlänge des Kunststoff-Formteils erfolgt eine Extrahierung signifikanter Merkmale des Istspektrums wie Maxima, Minima, Wendepunkte, Bandbreiten der Resonanz-Peaks und Hüllkurven mittels der Fuzzy-Logik und/oder der neuronalen Netze.

Ebenso können zur Qualitätsprüfung von Blechbauteilen Einschnürungen, Risse und Abweichungen von der Sollgeometrie sowie Werkstoffabweichungen durch einfache Berechnung des Korrelationskoeffizienten zwischen Soll- und Istspektren bestimmt und gleichzeitig eine Abweichung der Material- oder Formteileigenschaften anhand der Verschiebung der Maxima bzw. Minima festgestellt werden. Zur genauen Ermittlung von Einschnürungen, Rissen und Abweichungen von der Sollgeometrie sowie von Werkstoffabweichungen kann ebenfalls eine Extrahierung signifikanter Merkmale des Istspektrums wie Maxima, Minima, Wendepunkte, Bandbreiten der Resonanz-Peaks und Hüllkurven mittels Fuzzy-Logik und/oder der neuronalen Netze erfolgen.

Die Prüfanordnung zur Durchführung des erfindungsgemäßen Verfahrens ist mit einer Aktuator-Sensoreinheit ausgerüstet, die ein Koppelelement aufweist, und zeichnet sich aus durch
einen Signalgenerator, der zur Aktuatoranregung Einzelimpulse oder über einen gewissen Bereich frequenzvariable Schwingungen beliebiger Form und Amplitude erzeugt,
Mittel zur Überwachung von Form und Amplitude der Aktuator-Anregung, und
einen elektronischen Signalanalysator, mit dem mindestens die vom Sensor erfaßten, mechanischen Anregungsschwingungen des Aktuators analysiert werden.

Die Überwachung des Signalgenerators kann z. B. in einem Programm für die Ausgabe einzelner Spannungsimpulse mit einer bestimmten Amplitude für jede Frequenz bestehen. Auch ist es möglich, die Anregung des Aktuators in dem Signalgenerator zu messen und entsprechend zu korrigieren oder gegebenenfalls in einem Regelkreis in Form und Amplitude auf einen konstanten Wert zu halten. Vorteilhafterweise sind ferner Mittel vorgesehen, die die Anregung des Aktuators erst nach Überschreiten eines Schwellenwertes für die Anpreßkraft des Koppelelementes an das Formteil auslösen, wobei die Ermittlung der Anpreßkraft durch den Sensor erfolgt.

Das erfindungsgemäße Verfahren ermöglicht eine verhältnismäßig schnelle - im Bereich von Millisekunden - und einfache Prüfbarkeit von Bauteileigenschaften, die in funktionellem Zusammenhang mit der Steifigkeit, Dichte und Geometrie des Bauteils stehen. Risse, Lunker, Werkstoffelastizität, Formabweichungen und ähnliche Bauteileigenschaften sind im Vergleich zu einem Referenzmuster online detektierbar. Die Analyse des Anregungssignals und/oder des Antwortsignals und/oder des Antwortsignals als Funktion des Anregungssignals (Übertragungsfunktion) durch Transformation in den Frequenzbereich liefert auf einfache Weise charakteristische Amplitudenmaxima, die sich durch Fehler im Werkstoff oder am Bauteil verschieben, so daß eine Identifizierung (Form, Amplitude, Frequenz) schnell möglich ist. Durch die Integration der Kraftmeßzelle kann eine Anlageerkennung erfolgen, und die bisher üblichen Näherungsschalter in den Handhabungsgeräten können entfallen.

So läßt sich die Qualität z. B. von Tiefziehblechen schnell erkennen, Risse und Einschnürungen an Tiefziehteilen sind während der Handhabung im Preßwerkzeug feststellbar, Fasergehalte und Faserlängenverteilungen in Verbundkunststoffen sind geeignet detektierbar, Risse, Lunker, Inhomogenitäten, Poren, Porösitäten, Einschlüsse und Füllstoffgehalte in metallischen, nicht-metallischen Halbzeugen und Bauteilen sowie in Verbundwerkstoffen und -bauteilen sowie Änderungen von Bauteilwandstärken und des Bauteilverzugs bzw. von Geometrieänderungen lassen sich bequem erkennen und Werkstoffe zur Sortierung in Recycling-Prozessen problemlos erfassen. Ferner ist das erfindungsgemäße Verfahren zur Füllstandskontrolle, zur Diagnose von Maschinenkomponenten und zur Prüfung von Keramikbauteilen geeignet.

Die Erfindung wird nachfolgend anhand der Zeichnungen näher erläutert. In diesen sind:
Fig. 1 ein Blockschaltbild einer Ausführungsform einer Prüfanordnung zur Durchführung des erfindungsgemäßen Verfahrens, aus dem der funktionale Zusammenhang der für die Bauteilprüfung erforderlichen Funktionsblöcke hervorgeht,
Fig. 2 eine Meßanordnung zur Ermittlung des in ein Bauteil erfindungsgemäß eingekoppelten Anregungssignals,
Fig. 3 ein Meßaufbau zur Ermittlung des Übertragungsverhaltens eines Bauteils, z. B. eines Kfz-Ansaugkrümmers,
Fig. 4 ein 3 D-Schaubild, das die Ermittlung der Frequenzantworten des Ansaugkrümmers bei der Durchführung des Verfahrens mit dem Meßaufbau nach Fig. 3 zeigt,
Fig. 5 ein Meßaufbau zur Bestimmung des Fasergehaltes in Kunststoff-Bauteilen gemäß dem erfindungsgemäßen Verfahren,
Fig. 6 ein weiteres Blockschaltbild einer Ausführungsform der Prüfanordnung zur Durchführung des erfindungsgemäßen Verfahrens,
Fig. 7a-7c Diagramme, aus denen die Anregungsspektren zur Bestimmung des Fasergehaltes eines mit dem Meßaufbau gemäß Fig. 2 geprüften Ansaugkrümmers hervorgehen,
Fig. 8a-8c Diagramme, aus denen Anregungsspektren von Tankhalbschalen bei der Rißprüfung mit dem Meßaufbau gemäß Fig. 2 hervorgehen,
Fig. 9 ein 3 D-Schaubild, das Anregungsspektren bei unterschiedlicher Bauteilgüte darstellt,
Fig. 10 ein 3 D-Schaubild von bei der Prüfung von Kunststoff-Bauteilen ermittelten Frequenzspektren bei verschiedenen Fasergehalten und Faserlängen,
Fig. 11a-11c Diagramme, die Frequenzspektren von lang und kurz faserverstärkten Kunststoff-Bauteilen bei 80 °C zeigen,
Fig. 12 ein Diagramm, das den zeitlichen Verlauf des Kraftsignals eines Hammerimpulses zeigt,
Fig. 13 ein Diagramm, das die Anregungsspektren des Hammerimpulses für verschiedene Koppelelemente wiedergibt,
Fig. 14 ein Blockschaltbild eines zur Durchführung des erfindungsgemäßen Verfahrens einsetzbaren lernfähigen Prüfsystems, und
Fig. 15a-15c Beispiele möglicher Auswertungsstrategien beim Einsatz des Prüfsystems nach Fig. 16.

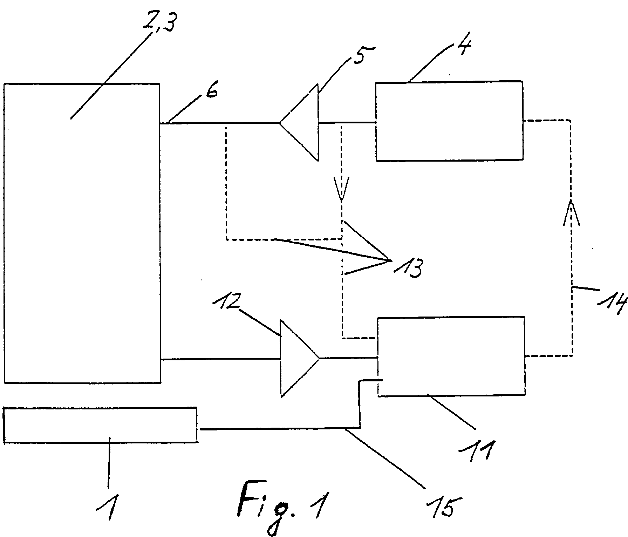

Eine Ausführungsform einer Prüfanordnung zur Durchführung des erfindungsgemäßen Verfahrens weist nach dem Blockschaltbild gemäß Fig. 1 eine schematisch dargestellte Aktuator-Sensoreinheit 2, 3 auf, die ein Kopplungselement aufweisen kann und mittels der ein Anregungssignal in ein zu prüfendes Bauteil 1 einleitbar ist. Hierzu wird der Aktuator-Sensoreinheit 2, 3 eine von einem elektrischen Signalgenerator 4 erzeugter und von einem Leistungsverstärker 5 verstärkte elektrische Anregungsspannung über eine Leitung 6 zugeführt. Der Signalgenerator 4 kann z. B. als frei programmierbarer Impuls- oder als Frequenzgenerator ausgebildet sein. Die vom Sensor der Aktuator-Sensoreinheit 2, 3 erfaßten Meßsignale werden einem Ladungsverstärker 12 zugeführt, von diesem verstärkt und dann in einen Analysator oder AD-Wandler 11 weitergeleitet, in dem sie analysiert und weiterverarbeitet werden. Ein Temperatur-Meßfühler 15 erfaßt in der Aktuator-Sensoreinheit gleichzeitig die Temperatur des zu prüfenden Objektes.

Für eine Überwachung der Aktuator-Anregung können je nach Erfordernis die Signale des Signalgenerators 4 wahlweise vor oder nach dem Leistungsverstärker 5 abgezweigt und über Signalleitungen 13 ebenfalls in den Analysator 11 eingespeist und dort analysiert werden. Weicht die Anregung von der Sollform und/oder Amplitude ab, so können die Abweichungen in einem Regelkreis über Leitungen 14 korrigiert werden. Auch ist es möglich, vom Analysator 11 aus über eine Leitung 14 erst für die Auslösung der Anregung des Aktuators der Aktuator-Sensoreinheit 2, 3 zu sorgen, wenn die auf das Bauteil 1 einwirkende Anlagekraft des in der Aktuator-Sensoreinheit 2, 3 integrierten mechanischen Koppelelementes erst einen Schwellwert überschritten hat. Die Prüfanordnung gewährleistet somit z. B. zum einen eine konstante Anregung des Aktuators mit akustischen Schwingungen und zugleich eine auf das Bauteil 1 konstant einwirkende mechanische Kraft bei der Ankopplung der Prüfanordnung an das Bauteil 1, so daß Änderungen in den Schwingungsspektren der in das Bauteil 1 induzierten Schwingungen, die von dem elektromechanischen Sensor der Aktuator-Sensoreinheit 2, 3 erfaßt werden, eindeutig dem Material und geänderten Eigenschaften des untersuchten Bauteils 1 zugeordnet werden können.

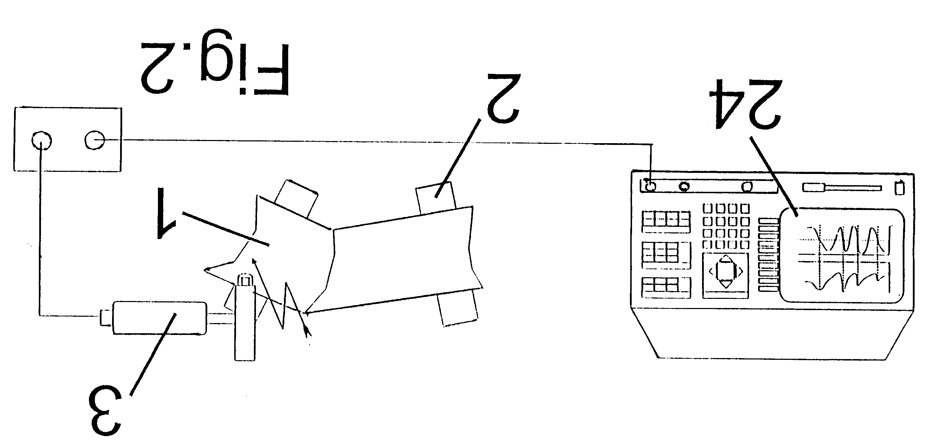

Fig. 2 zeigt einen prototypischen Meßaufbau zur Ermittlung des in das Bauteil 1 eingekoppelten Anregungssignals, wobei die Aktuator-Sensoreinheit von einem Hammer 2 mit integriertem Sensor 3 gebildet ist, der das Anregungssignal detektiert. Das erfaßte Anregungssignal wird dann einem Fourieranalysator 24 zugeführt und von diesem in das zu analysierende Frequenzspektrum transformiert.

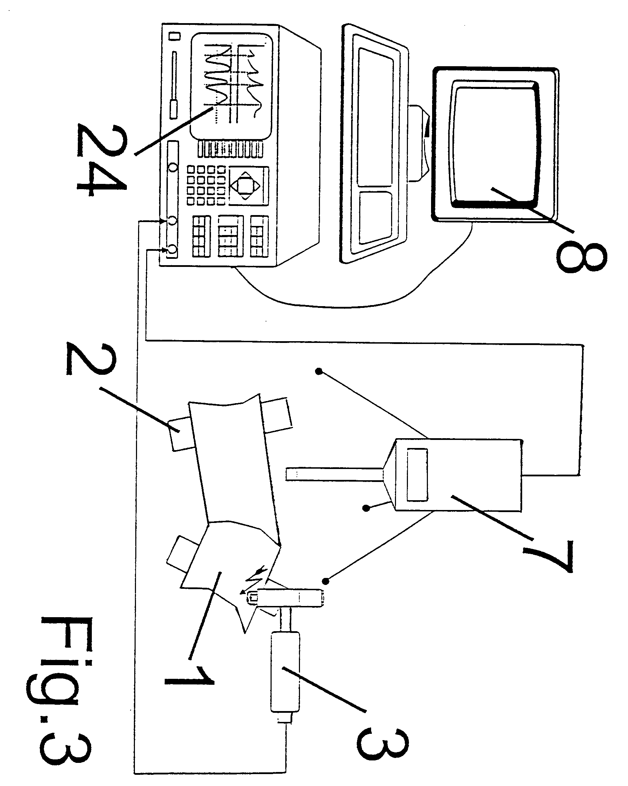

Fig. 3 zeigt einen realisierten Meßaufbau im Labormaßstab zur Ermittlung des Übertragungsverhaltens eines zu prüfenden Bauteils 1 bei der Durchführung des erfindungsgemäßen Verfahrens. Mittels des als Aktuator dienenden Hammers 2 mit integriertem Sensor 3 wird wiederum das Anregungssignal in das Bauteil 1 eingeleitet und zugleich dem Fourieranalysator 24 zugeführt. Mittels eines Schallpegelmeßgerätes 7 wird an einer von der Schwingungsanregungsstelle des Bauteils 1 entfernten Stelle das Antwortsignal erfaßt und ebenfalls dem Fourieranalysator 3 zugeleitet, der das Anregungssignal in das Frequenzspektrum transformiert und mit einer PC-Auswertereinheit 8 gekoppelt ist. Neben der Analysierung des Anregungsspektrums kann somit das Übertragungsverhalten des zu prüfenden Bauteils 1 zwischen den beiden genannten Stellen ermittelt werden. Mittels der PC-Auswertereinheit wird dann das akustische Schwingungsspektrum und das Übertragungsverhalten des geprüften Bauteils 1 mit dem akustischen Schwingungsspektrum bzw. Übertragungsverhalten eines "guten", d.h. fehlerfreien oder nur mit Fehlern innerhalb eines Toleranzbereiches behafteten Bauteils verglichen. Weist das Frequenzspektrum und Übertragungsverhalten des geprüften Bauteils 1 über die Toleranzgrenzen hinausgehende Abweichungen bei dem Vergleich auf, so muß das Bauteil ausgeschieden werden.

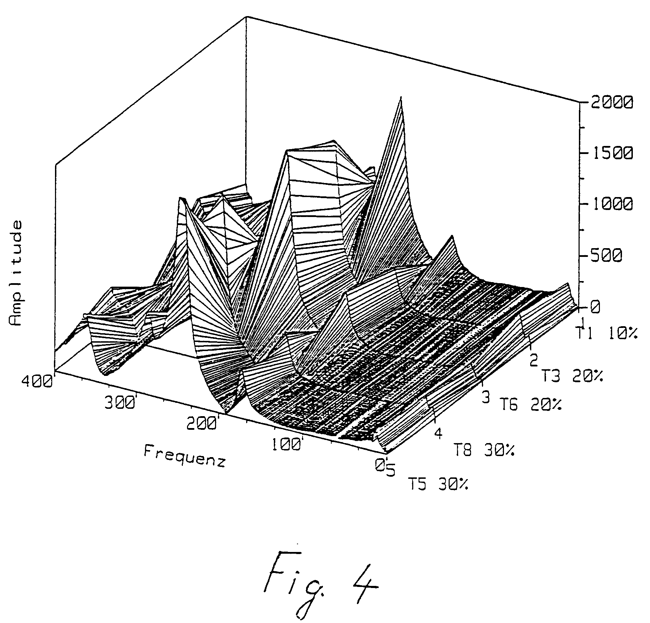

Fig. 4 zeigt ein 3 D-Schaubild, das am Beispiel eines faserverstärkten Ansaugkrümmers die mit der Prüfanordnung gemäß Fig. 3 ermittelten Frequenzantworten in Abhängigkeit vom Fasergehalt des Werkstoffes des Ansaugkrümmers für Frequenzgänge bei Raumtemperatur und verschiedenen Fasergehalten in Gew.-% im Bauteil zeigt, wobei der Einfluß des Fasergehaltes und der Faserlänge auf die Übertragungsfrequenz deutlich wird.

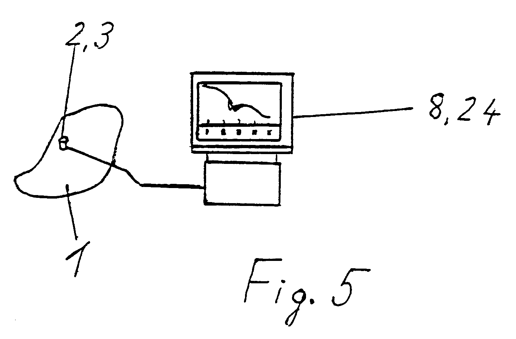

Fig. 5 gibt einen beispielhaften Meßaufbau zur Bestimmung des Fasergehaltes in Kunststoffbauteilen wieder, der sich gliedert in einen Aktuator 2, der ein definiertes Anregungssignal, z. B. eine Sinusschwingung, in das Kunststoff-Bauteil 1 einkoppelt, einen im Aktuator 2 integrierten Sensor 3, der das Anregungssignal detektiert, einen in einem Prüfsystem integrierten Fast-Fourier-Analysator (digitaler Signalprozessor) bzw. Software mit entsprechender Funktion, zur online Transformation des Zeitsignals in ein Frequenzspektrum sowie eine Auswerte-Logik, die das gewonnene Frequenzspektrum mit den Daten eines Gutteils vergleicht und über iO (in Ordnung) oder niO (nicht in Ordnung) entscheidet. Die Auswerte-Logik kann nach algebraischen Prinzipien als Fuzzy-Logik oder neuronales Netz implementiert werden. Beim Durchführen des erfindungsgemäßen Verfahrens mit einem derartigen verhältnismäßig einfachen Meßaufbau kann das Anregen, Detektieren und Auswerten online im Fertigungsprozeß erfolgen, so daß ohne Einfluß auf die Zykluszeiten eine vollständige Prüfung des Bauteils möglich ist.

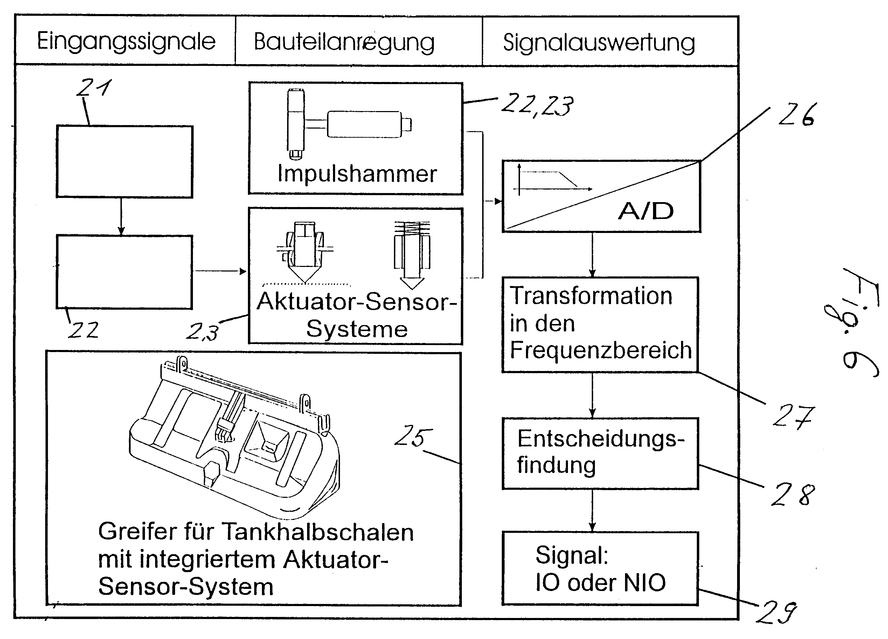

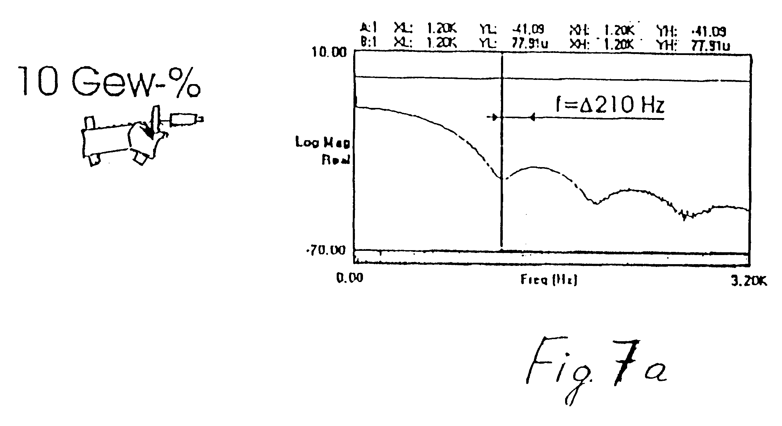

Eine weitere Ausführungsform der Prüfanordnung zur Durchführung des erfindungsgemäßen Verfahrens, bei der die Aktuator-Sensoreinheit in Greifersysteme einer Fertigungsstraße z. B. für Kfz-Tankhalbschalen integriert ist, geht aus dem Blockschaltbild gemäß Fig. 6 hervor, die den funktionalen Zusammenhang der für die Prüfung der Tankhalbschalen erforderlichen Funktionsblöcke zeigt. Danach kann die Anregung der zu prüfenden Tankhalbschalen durch eine Impulskammer 22 mit integriertem Sensor 23 oder in der automatisierten Prüfung durch andere kombinierte Aktuator-Sensorsysteme 24 erfolgen, die in die bereits vorhandenen Handhabungs- und Greifersysteme 25 oder in speziell vorgesehene Ablagen integriert werden. Über einen Funktionsgenerator 21 mit nachgeschaltetem Leistungsverstärker 22 wird für den Aktuator 22 das Anregungssignal bereitgestellt, wobei die Signalform und die erforderliche Leistung vom Aktuatorprinzip und der durchzuführenden Prüfaufgabe bestimmt wird. Das mittels des Sensors 23 ermittelte Kraftsignal wird über einen Tiefpaßfilter einem A/D-Umsetzer 26 zugeführt und digitalisiert. Die Messung kann auf den Kraftimpuls getriggert werden. Das Kraftsignal kann im Zeitbereich (Impulsdauer) oder mittels einer hard- oder softwaremäßigen Transformation 27 in den Frequenzbereich überführt und ausgewertet werden. Die Auswertung 28 der Impulsdauer der Bandbreite oder weiterer Kriterien bzw. Entscheidungsfindung erfolgt mit Hilfe lernender Methoden, neuronaler Netze, Fuzzy-Logik oder weiterer geeigneter Verfahren oder Verfahrenskombinationen. Das Ergebnis der Entscheidungsfindung iO (in Ordnung) oder niO (nicht in Ordnung) wird über eine Ausgabe 29 bereitgestellt und bei Bedarf zur Prozeßregelung oder weiteren Auswertung z. B. im Hinblick auf Produkthaftung, Qualitätskontrolle usw. verwendet.

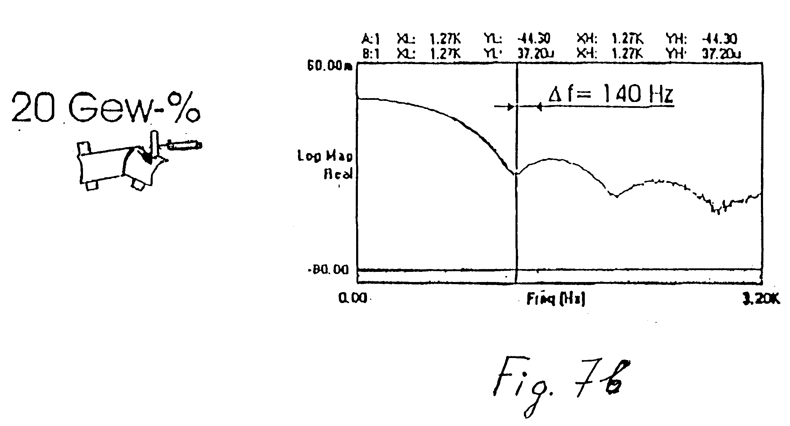

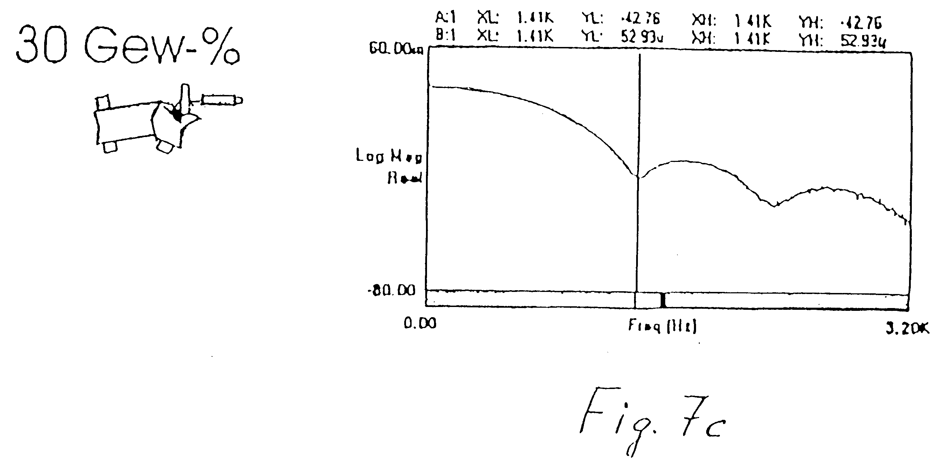

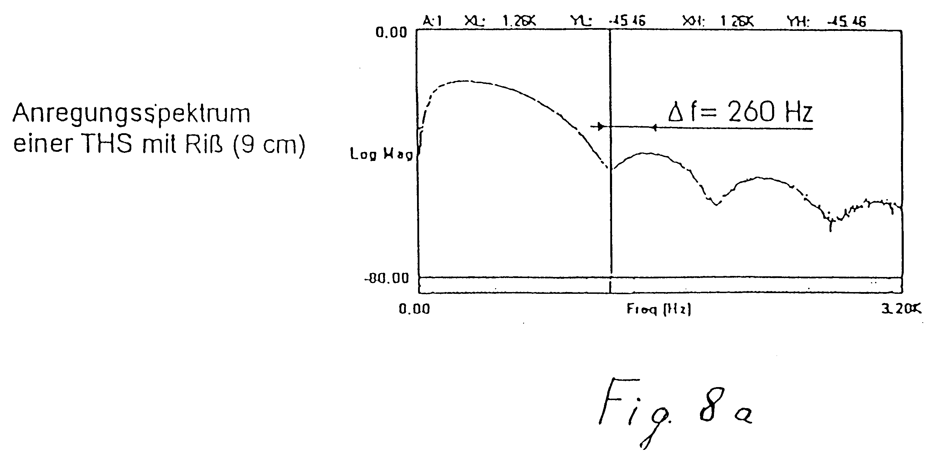

Erfaßte Anregungsspektren zur Ermittlung des Fasergehaltes von 10 Gew.-% bzw. 20 Gew.-% bzw. 30 Gew.-% eines Ansaugkrümmers sind aus den Fig. 7a bis 7c zu entnehmen. Weiterhin sind aus den Fig. 8a bis 8c erhaltene Anregungsspektren von Tankhalbschalen bei der Rißprüfung mit einem Riß von 9 cm bzw. 3 cm der Tankhalbschale in Gegenüberstellung zu dem Anregungsspektrum eines Gutteils ersichtlich.

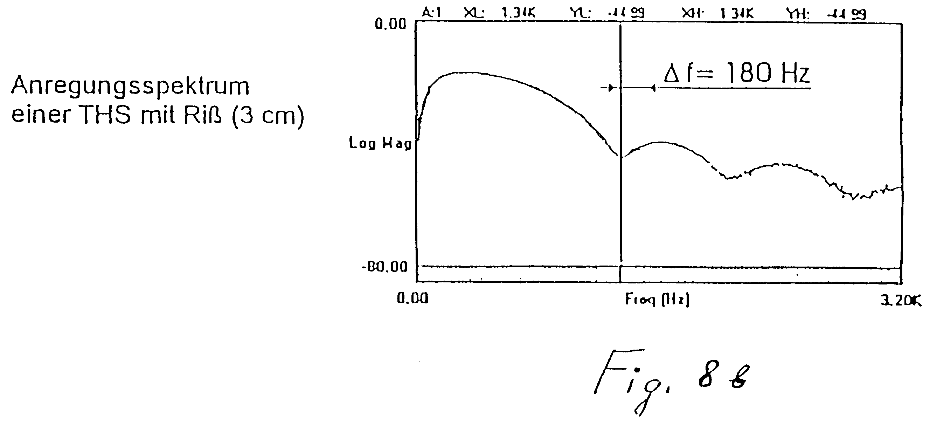

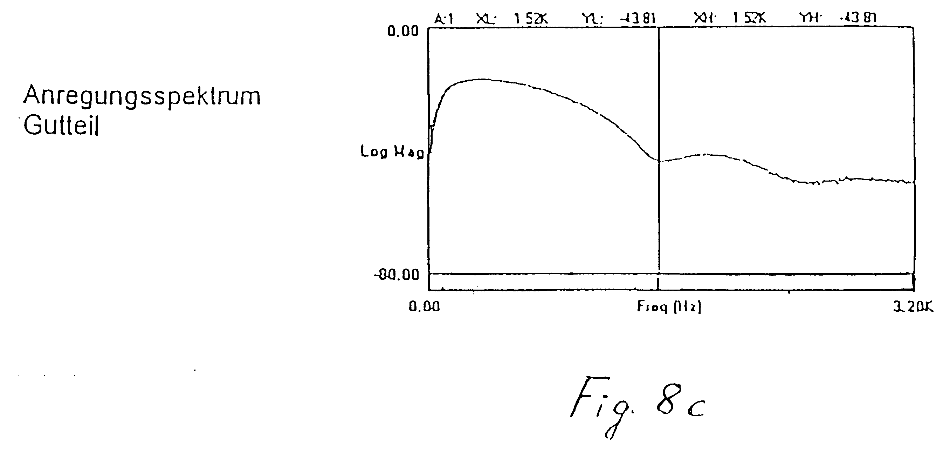

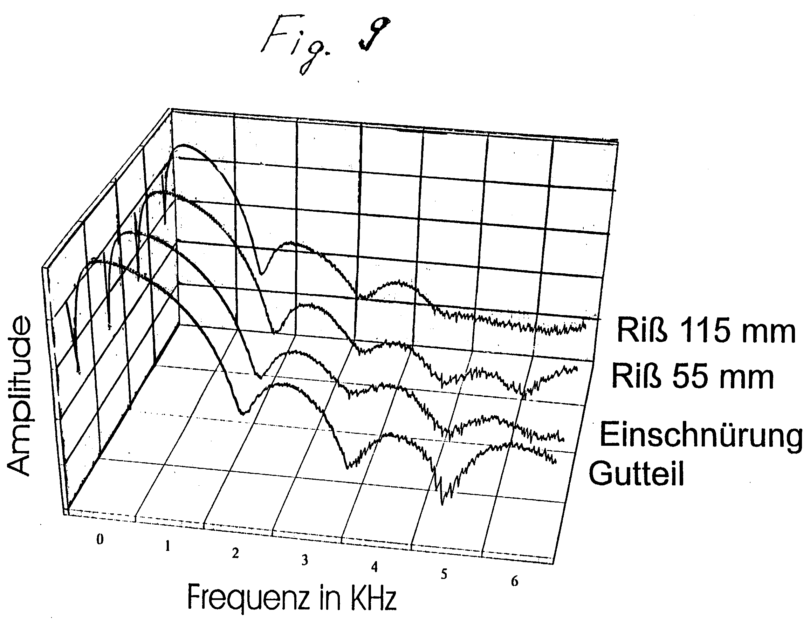

Weitere Anregungsspektren bei Bauteilen unterschiedlicher Güte aus Blech sind in einer 3 D-Darstellung gemäß Fig. 9 für Bauteile mit einem Riß von 115 mm bzw. 55 mm bzw. einer Einschnürung in Gegenüberstellung zu einem Gutteil wiedergegeben, wobei deutlich ist, daß neben einer Verschiebung der Minima zu niedrigen Frequenzen eine Veränderung der Welligkeit bei einer automatisierten Anregung der Amplitudenwerte festzustellen ist.

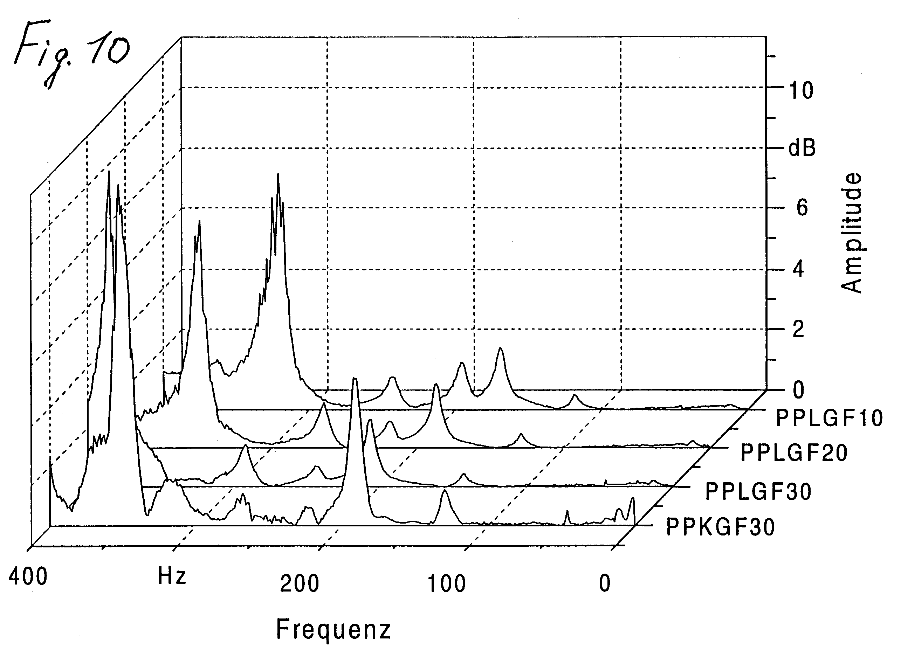

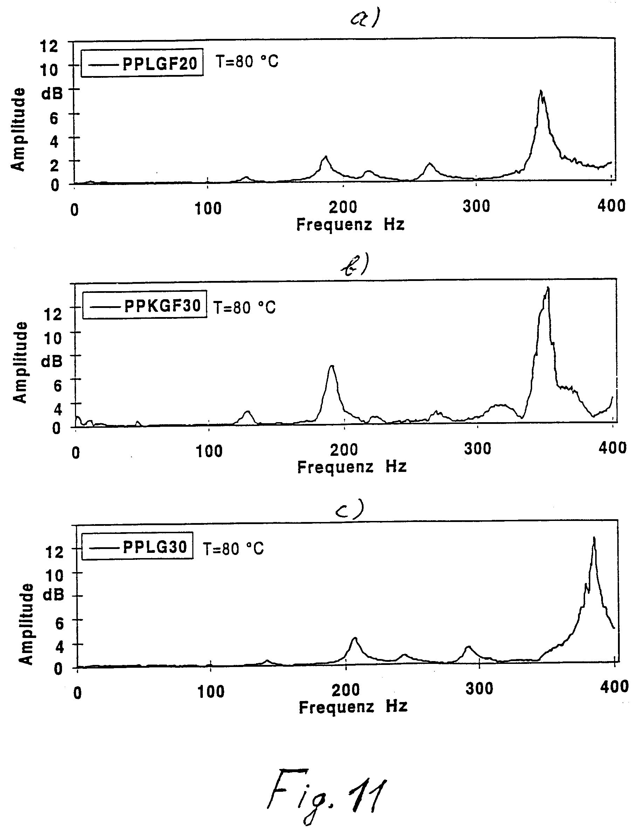

Entsprechend zeigen Fig. 10 und Fig. 11 bei Kunststoff-Bauteilen aus Polypropylen ermittelte Frequenzspektren bei verschiedenen Fasergehalten und Faserlängen und einer Temperatur von 80 °C, und gemäß Fig. 10 in einer 3 D-Darstellung für langfaserverstärkte Polypropylen-Bauteile PPLGF1, PPLGF20 und PPLGF30 sowie im Vergleich zu kurzfaserverstärkten Polypropylen-Bauteilen PPKGF30 und gemäß Fig. 11 in normaler Diagrammdarstellung der Amplitude über die Frequenz für langfaserverstärkte Polypropylen-Bauteile PPLGF20 und PPLGF30 in Gegenüberstellung zu kurzfaserverstärkten Polypropylen-Bauteilen PPKGF30, wobei jeweils deutlich die Verschiebung des Hauptmaximums mit steigendem Fasergehalt zu höheren Frequenzen hin zu erkennen ist. Signifikant ist, daß langfaserverstärkte Polypropylen-Bauteile bei gleichem Fasergehalt im Vergleich zur Kurzfaserverstärkung deutlich höhere Eigenfrequenzen aufweisen. Aber auch ungeeignete Verarbeitungsparameter bei der Herstellung von langfaserverstärkten Bauteilen sind im Spektrum erkennbar.

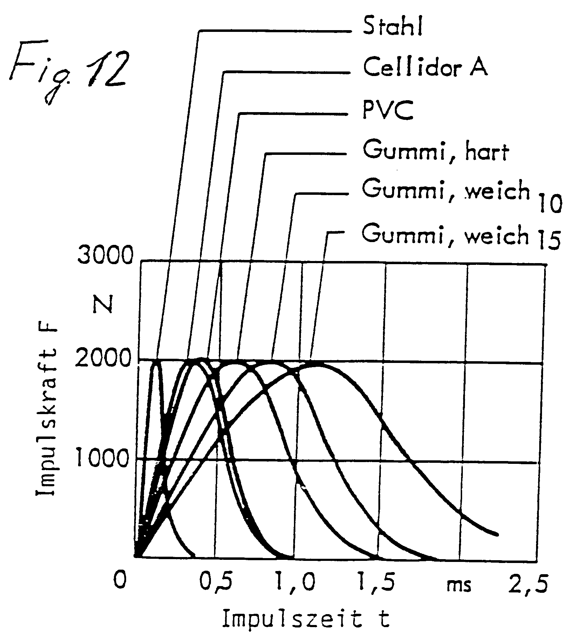

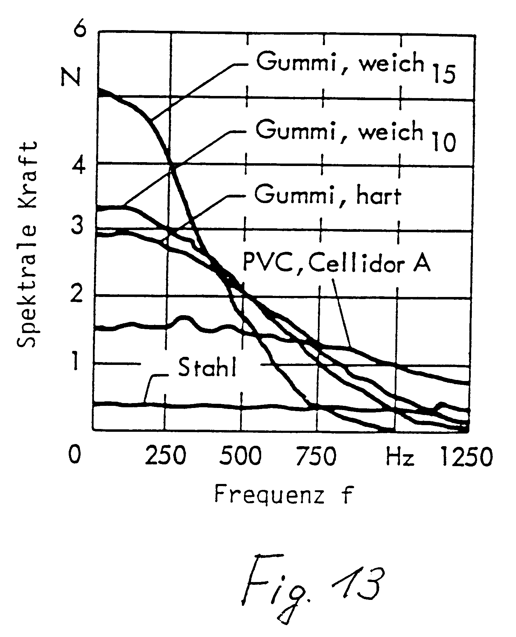

Es ist eingangs bereits darauf hingewiesen worden, daß die Impulsdauer des Anregungsimpulses durch die Steifigkeit des Bauteils und des in die Aktuator-Sensoreinheit integrierten Kopplungselementes bestimmt wird. Im Falle der Verwendung eines Impulshammers bei der Schwingungsformanalyse kann dessen Kopplungselement nach Bedarf ausgetauscht werden. So wird z. B. für die Qualitätsprüfung ein eine hohe Steifigkeit aufweisendes Stahlelement eingesetzt. Ändert sich die Steifigkeit des zu prüfenden Bauteils, so wird die Impulsdauer modifiziert, wie Fig. 12 vermittelt, die den zeitlichen Verlauf des Kraftsignals eines Hammerimpulses bezogen auf unterschiedliche Werkstoffe von Kopplungselementen wiedergibt. Übliche Impulszeiten liegen im Bereich von Millisekunden. Die Transformation des Kraftsignals in den Frequenzbereich vermittelt die Bandbreite der Anregung, wie aus Fig. 13 ablesbar ist, die Anregungsspektren des Hammerimpulses für verschiedene Koppelelemente zeigt.

Ähnliche Anregungsspektren können bei fehlenden oder mangelhaften Schweißnähten, Klebungen, Nietverbindungen, weiteren Fügefehlern oder bei unvollständigen Baugruppen ermittelt werden.

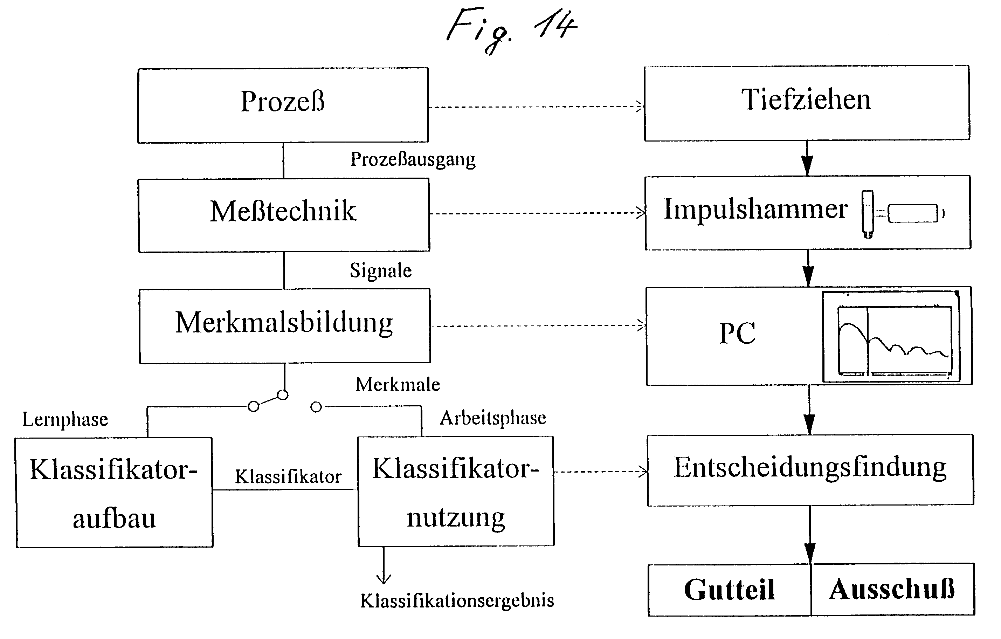

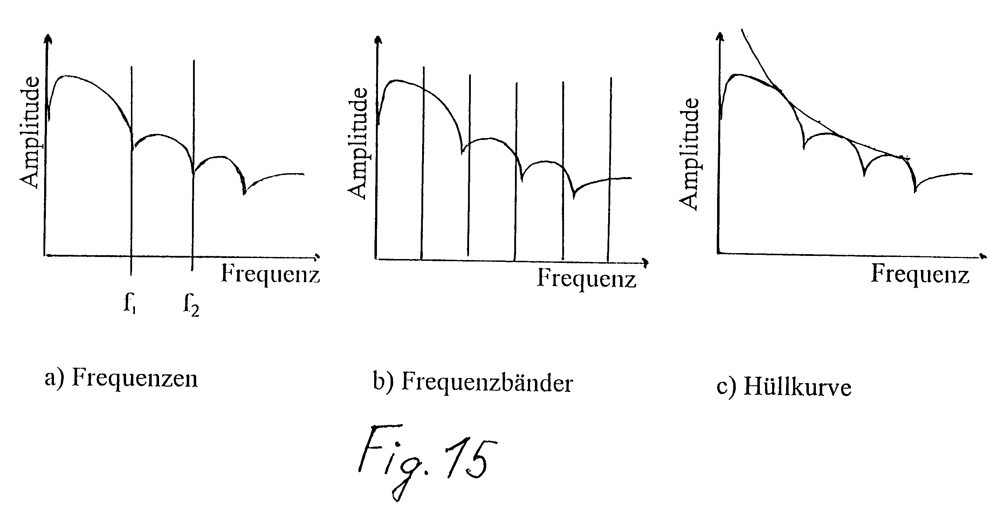

Es ist bereits darauf hingewiesen worden, daß für eine Auswertung unterschiedlicher Ausprägungen von Anregungsspektren mit Methoden der Fuzzy-Logik und/oder neuronaler Netze die Extrahierung signifikanter Merkmale der Anregungsspektren wie Maxima, Minima, Wendepunkte, Bandbreiten der Resonanz-Peaks, Hüllkurven erforderlich ist, wobei die Ermittlung dieser Charakteristika mit einschlägig bekannten Algorithmen erfolgt und zum Auswerten lernfähige Prüfsysteme eingesetzt werden. Die zu realisierenden Prüfsysteme müssen einen Teach-Modus besitzen. Das Teachen erfolgt gleichzeitig mit der Einrichtung der Produktionsmaschine. Fig. 14 zeigt im Blockschaltbild einen beispielhaften funktionalen Aufbau eines lernfähigen Prüfsystems, das z. B. entsprechend den aus den Fig. 15a bis 15c möglichen Auswerterstrategien (Frequenzen bzw. Frequenzbänder bzw. Hüllkurven) ausgelegt werden kann.

## Patentansprüche

1. Verfahren zur Qualitätsprüfung von Halbzeugen, Baugruppen und Bauteilen, insbesondere von faserverstärkten Kunststoff-Formteilen und Blechbauteilen, bei dem zum Erkennen von Materialfehlern und/oder -eigenschaften das Frequenzspektrum von Anregungsschwingungen eines zu prüfenden Bauteils mit dem Frequenzspektrum eines gleichartigen Gut-Bauteils mit bekannten Eigenschaften als Bezugsspektrum verglichen wird, dadurch gekennzeichnet, daß
in das zu prüfende Bauteil ein nach Form und Amplitude überwachtes Anregungssignal eingekoppelt wird,
das eingekoppelte Anregungssignal und/oder ein Antwortsignal detektiert wird,
das Anregungssignal und/oder das Übertragungsverhalten des zu prüfenden Bauteils ermittelt, analysiert und die gewonnenen Daten mit denen des Gut-Bauteils verglichen werden sowie über iO (in Ordnung) oder niO (nicht in Ordnung) entschieden wird.

2. Verfahren nach Anspruch 1, dadurch gekennzeichnet, daß das Anregungssignal in das Frequenzspektrum transformiert und das Frequenzspektrum dann elektronisch analysiert wird.

3. Verfahren nach Anspruch 1, dadurch gekennzeichnet, daß die Zeitkomponente des ermittelten Anregungssignals ausgewertet wird.

4. Verfahren nach Anspruch 1, dadurch gekennzeichnet, daß das Anregungssignal und/oder das Antwortsignal in Abhängigkeit von der Temperaturveränderung des Bauteils ermittelt wird.

5. Verfahren nach Anspruch 1, dadurch gekennzeichnet, daß als Anregungssignal Einzelimpulse gewählt werden, um das Bauteil zu freien Schwingungen anzuregen.

6. Verfahren nach Anspruch 1, dadurch gekennzeichnet, daß das Bauteil durch Schwingungen, die über einen gewissen Bereich frequenzvariabel sind und beliebige Form und Amplitude aufweisen, zu erzwungenen Schwingungen angeregt wird.

7. Verfahren nach einem der Ansprüche 1 bis 6, dadurch gekennzeichnet, daß die Anregung des Bauteils auf piezoelektrischer, elektrodynamischer, elektrostatischer, magnetostriktiver, pneumatischer und/oder hydrodynamischer Basis sowie manuell mit Hammerimpuls erfolgt.

8. Verfahren nach einem der Ansprüche 1 bis 7, dadurch gekennzeichnet, daß die Erfassung des Anregungssignals und/oder des Antwortsignals auf piezoelektrischer, elektrodynamischer, elektrostatischer, magnetostriktiver, resistiver Basis und/oder mittels Dehnungsmeßstreifen erfolgt.

9. Verfahren nach Anspruch 5 oder 6, dadurch gekennzeichnet, daß zum Schwingungsanregen Signalformen wie Rechteck-Impuls, Dreieck-Impuls, Sinus-Impuls, Gauß, Rauschen oder freimodulierte Signalformen gewählt werden.

10. Verfahren nach Anspruch 1, dadurch gekennzeichnet, daß die Analyse des Anregungssignals und/oder des Antwortsignals mittels Fouriertransformation durchgeführt wird.

11. Verfahren nach Anspruch 1, dadurch gekennzeichnet, daß das Anregen, Detektieren und Auswerten im Fertigungsprozeß des Bauteils online erfolgen, wobei das Anregungssignal über einen Funktionsgenerator mit nachgeschaltetem Leistungsverstärker mit Hilfe eines Aktuators in das Bauteil eingekoppelt und nach dem Detektieren über den Kraftsensor oder Wegsensor und einen Tiefpaßfilter einem A/D-Umsetzer zugeführt, von diesem digitalisiert und auf den Impuls getriggert wird, anschließend im Zeitbereich (Impulsdauer) oder mittels einer hard- oder softwaremäßigen Transformation in den Frequenzbereich überführt und dann mit Hilfe lernfähiger Methoden, neuronaler Netze oder Fuzzy-Logik ausgewertet wird, worauf das Ergebnis der Entscheidungsfindung iO (in Ordnung) oder niO (nicht in Ordnung) ausgegeben und bei Bedarf zur Prozeßregelung und/oder zur weiteren Auswertung verwendet wird.

12. Verfahren nach Anspruch 1 bis 11 zur Qualitätsprüfung eines faserverstärkten Kunststoff-Formteils, dadurch gekennzeichnet, daß der Fasergehalt und die mittlere Faserlänge im Kunststoff-Formteil bzw. eine Abweichung von dem Soll-Fasergehalt und der Soll-Faserlänge des Gut-Kunststoff-Formteils durch einfache Berechnung des Korrelationskoeffizienten zwischen Soll- und Istspektrum erfolgen und gleichzeitig eine Abweichung der Material- oder Formteileigenschaften anhand der Verschiebung der Maxima bzw. Minima festgestellt wird.

13. Verfahren nach Anspruch 12, dadurch gekennzeichnet, daß zur genauen Ermittlung des tatsächlichen Fasergehaltes und der Faserlänge des Kunststoff-Formteils eine Extrahierung signifikanter Merkmale des Istspektrums wie Maxima, Minima, Wendepunkte, Bandbreiten der Resonanz-Peaks und Hüllkurven mittels der Fuzzy-Logik und/oder der neuronalen Netze erfolgt.

14. Verfahren nach Anspruch 1 bis 11 zur Qualitätsprüfung von Blechbauteilen, dadurch gekennzeichnet, daß Einschnürungen, Risse und Abweichungen von der Sollgeometrie sowie Werkstoffabweichungen durch einfache Berechnung des Korrelationskoeffizienten zwischen Soll- und Istspektrum erfolgen und gleichzeitig eine Abweichung der Material- oder Formteileigenschaften anhand der Verschiebung der Maxima bzw. Minima festgestellt wird.

15. Verfahren nach Anspruch 14, dadurch gekennzeichnet, daß zur Ermittlung von Einschnürungen, Rissen und Abweichungen von der Sollgeometrie sowie von Werkstoffabweichungen eine Extrahierung signifikanter Merkmale des Istspektrums wie Maxima, Minima, Wendepunkte, Bandbreiten der Resonanz-Peaks und Hüllkurven mittels der Fuzzy-Logik und/oder der neuronalen Netze erfolgt.

16. Prüfanordnung zur Durchführung des Verfahrens nach den Ansprüchen 1 bis 15, mit einer Aktuator-Sensoreinheit, die ein Koppelelement aufweist, gekennzeichnet durch
einen Signalgenerator (4), der zur Aktuatoranregung Einzelimpulse oder über einen gewissen Bereich frequenzvariable Schwingungen beliebiger Form und Amplitude erzeugt,
Mittel (11, 13, 14) zur Überwachung von Form und Amplitude der Aktuator-Anregung, und
einen elektronischen Signalanalysator (11), mit dem mindestens die vom Sensor erfaßten, mechanischen Anregungsschwingungen des Aktuators (2) analysiert werden.

17. Prüfanordnung nach Anspruch 16, gekennzeichnet durch eine Meßeinrichtung (11) für die Anregungsspannungen des Aktuators (2).

18. Anordnung nach Anspruch 16 oder 17, gekennzeichnet durch einen Regelkreis (4, 13, 11, 14) zur Regelung der Anregungsspannungen des Aktuators (2).

19. Anordnung nach einem der Ansprüche 16 bis 18, gekennzeichnet durch Mittel (9, 11), die die Anregung des Aktuators erst nach Überschreiten eines Schwellenwertes für die Anpreßkraft des Koppelelementes (8) an das Formteil (18) auslösen, wobei die Ermittlung der Anpreßkraft durch den Sensor (9) erfolgt.
